# EUROPEAN PATENT SPECIFICATION

(11) **EP 1 734 608 B1**
(45) Date of publication and mention of the grant of the patent: **28.08.2013**
(21) Application number: 06113530.7
(22) Date of filing: 04.05.2006
(51) Int. Cl.: B25F 5/00, B25F 5/02, H02J 7/00, H01M 2/10, H01M 10/48

(54) **Battery charge indicator**
Batterie-Ladezustandsanzeiger
Indicateur de charge pour batterie

(30) Priority: 05.05.2005 US 677924
(43) Date of publication of application: 20.12.2006
(60) Divisional application: 07121403.5
(73) Proprietor: Black & Decker, Inc., Newark, DE 19711 (US)
(72) Inventor: Ayala, Adan, Baltimore, MD 21212 (US); Bradus, Robert, Bel Air, MD 21015 (US); Morris, Peter E., Baltimore, MD 21212 (US); Proakis, Michael J., Baltimore, MD 21206 (US)
(74) Representative: Bell, Ian Stephen

(56) References cited:
- EP-A1- 0 707 350
- EP-A1- 0 991 131
- GB-A- 2 266 003
- US-A- 5 391 972

## Description

This application derives priority from US Application No. 60/677,924, filed May 5, 2005.

This invention relates generally to power tool battery packs and more particularly to power tool battery packs with charge indicators.

The battery packs for portable power tools, outdoor tools and certain kitchen and domestic appliances may include rechargeable batteries, such as lithium, nickel cadmium, nickel metal hydride and lead-acid batteries, so that they can be recharged rather than be replaced. Thereby a substantial cost saving is achieved.

It is known to provide power tool battery packs with displays to show the state-of-charge of such battery packs. It is desired to provide an inexpensive mechanism to alert the user whether a power tool battery pack is charged or discharged.

Examples of power tool systems which demonstrate some of the problems set out above are disclosed in GB2266003, EP0707350 and EP0991131.

According to an aspect of the present invention, there is provided a system comprising the features of claim 1.

According to another aspect of the present invention, there is provided a battery pack comprising the features of claim 12.

An improved power tool system is employed. The system includes a cordless device having device terminals, a battery pack detachably engageable to the power tool, the battery pack comprising a housing, at least one cell disposed within the housing, pack terminals connectable to the device terminals, a movable member disposed within the housing, the member being movable between first and second positions to indicate a condition of the battery pack, one of the housing and the member having a detent engaging a detent notch disposed on the other of the housing and member for maintaining the member in at least one of the first and

second positions, and a charger electrically connectable to the battery pack for charging the battery pack, wherein at least one of the cordless device and the charger have a protrusion for moving the member between positions.

Additional features and benefits of the present invention are described, and will be apparent from, the accompanying drawings and the detailed description below.

The accompanying drawings illustrate preferred embodiments of the invention according to the practical application of the principles thereof, and in which:
FIG. 1 is a diagram of a system according to the invention; and
FIG. 2 is a partial cross-sectional view of a charge indicator according to the invention.

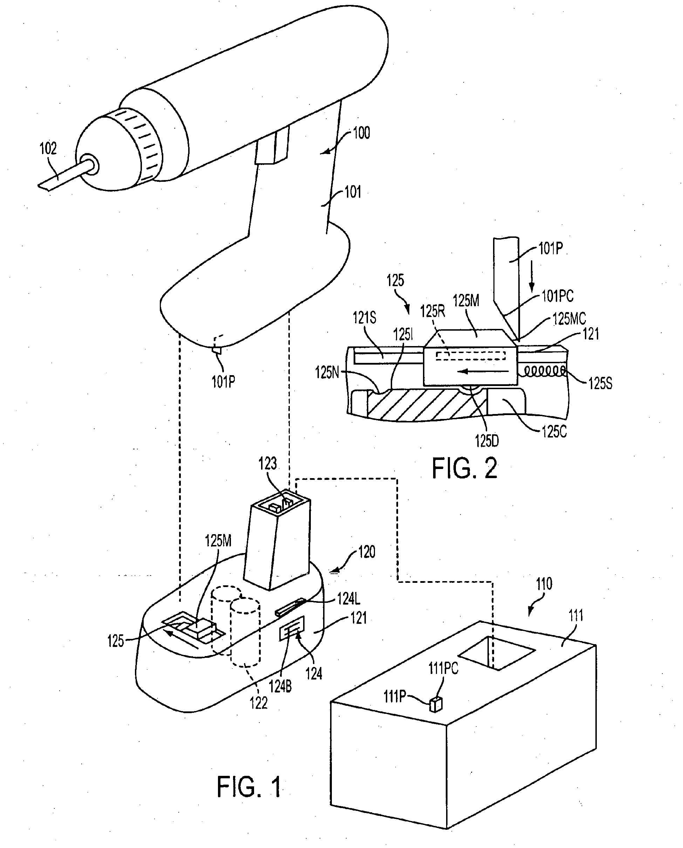

A system according to the invention is shown in FIG. 1. In such figure, the system preferably includes a cordless device 100, such as a drill or other power tool, a power tool battery pack 120 electrically connectable to cordless device 100 for powering cordless device 100, and a charger 110 electrically connectable to power tool battery pack 120 for charging the power tool battery pack 120.

Cordless device 100 may have a housing 101, and a motor (not shown) disposed in device housing 101 for driving a tool 102 or performing any other action.

Cordless device 100 is electrically connectable to a power tool battery pack 120. Battery pack 120 may have a pack housing 121 and at least one cell 122 disposed within the housing 121. Cell 122 may have a chemistry of lithium, nickel cadmium, nickel metal hydride and/or lead-acid. Persons skilled in the art will recognize that such power tool battery pack 120 may be built according to the teachings of US Patent Nos. 6,057,608 and 5,144,217.

Battery pack 120 may also have pack terminals 123 that are connectable to terminals (not shown) of the cordless device.

At least one of battery pack 120 and cordless device 100 will have a latching mechanism 124 for temporarily engaging the other of battery pack 120 and cordless device 100, thus securely holding the battery pack 120 and cordless device 100 together. Referring to FIG. 1, latching mechanism 124 may include a latch 124L that engages device housing 101, and a button 124B which can be pushed by the user to move latch 124L to an unlatched position, thus releasing the battery pack 120 from cordless device 100.

Such latching mechanisms are well known in the art. Nonetheless, persons skilled in the art are referred to US Patent Nos. 6,656,626, 6,057,608, 6,007,939 and 5,144,217 and US Patent Publication Nos. US 20040242043 and US 20040242042 for further information.

Battery pack 120 may be electrically connectable to a charger 110 for charging battery pack 120. Charger 110 may include a housing 111 for supporting the charger electronics (not shown) and/or battery pack 120 when battery pack 120 is connected to charger 110.

Referring to FIGS. 1-2, battery pack 120 preferably has an indicator assembly 125 for indicating the state-of-charge of battery pack 120. Indicator assembly 125 may have a movable member 125M which is slidably or pivotably attached to pack housing 121. Preferably, member 125M has at least one protrusion 125R that slides along a slot 121S in pack housing 121.

Member 125M preferably has a detent 125D that engages a detent notch 125N disposed on pack housing 121. Persons skilled in the art will recognize that pack housing 121 may alternatively carry the detent 125D, while the member 125M may have the detent notch 125N that engages detent 125D.

Member 125M may have at least one inclined surface 125MC. Surface 125MC may engage an inclined surface 101PC on a protrusion 101P of cordless device 100 to move member 125M along a first direction when battery pack 110 is connected to the cordless device.

Similarly, charger housing 111 may have a protrusion 111 P that may also have an inclined surface 111PC. When surfaces 111PC, 125MC engage, i.e., when battery pack 120 is disposed on charger 110 and electrically connected, member 125M will move along a second direction.

Pack housing 121 may have indicia 125I disposed underneath member 125M to indicate the state-of-charge of battery pack 120. Accordingly, when member 125M is moved by protrusion 101P to a first position, indicia 125I may indicate that the battery pack 120 has been discharged (or that at least it is not fully charged). Similarly, when member 125M is moved by protrusion 111P to a second position, indicia 125I may indicate that battery pack 120 has been charged (or at least that it has been disposed on a charger 110).

Persons skilled in the art will recognize that it is preferable pack housing 121 has two detent notches 125N for selectively maintaining the member 125M in the first and second positions described above. Preferably, surfaces 101PC, 125MC move the member 125M until detent 125D has disengaged the first detent notch 125N. A spring 125S disposed between member 125M and pack housing 121 may then move member 125M to the first position. Persons skilled in the art will recognize that spring 125S may be disposed to move member 125 to the second position.

Furthermore, persons skilled in the art will recognize that surfaces 101PC, 125MC may move the member 125M until detent 125D has disengaged the first detent notch 125N and engaged the second detent notch 125N.

Preferably, pack housing 121 may create a channel 125C to allow protrusion(s) 101P and/or 111P to move past member 125M into pack housing 121.

Member 125M is preferably movable by the user. Accordingly, it is desirable to design the detent 125D and detent notch(es) 125N so that the user (or protrusion(s) 101P and/or 111P) can easily move member 125M while maintaining member 125M in the selected position even if other forces, such as vibration, are applied to member 125M.

Persons skilled in the art will recognize that while indicator assembly 125 is not necessarily an accurate indicator of the state-of-charge of battery pack 120, it is convenient and less expensive than typical electronic state-of-charge indicators.

Persons skilled in the art may recognize other alternatives to the means disclosed herein.

## Claims

1. A system comprising:
a cordless (100) device having device terminals;
a battery pack (120) detachably engageable to the cordless device, the battery pack comprising a housing (121), at least one cell (122) disposed within the housing, pack terminals (123) connectable to the device terminals, a movable member (125M) disposed within the housing, the member being movable between first and second positions to indicate a condition of the battery pack; and
a charger (111) electrically connectable to the battery pack for charging the battery pack;
wherein at least one of the cordless device and the charger have a first protrusion (101P, 111 P) for moving the member between positions;
**characterised in that** one of the housing and the member has a detent (125D) engaging a detent notch (125N) disposed on the other of the housing and member for maintaining the member in at least one of the first and second positions.

2. A system according to claim 1, wherein the cordless device is a power tool.

3. A system according to claim 1 or 2, wherein the cordless device is a drill.

4. A system according to any one of the preceding claims, wherein the first protrusion (101 P) is disposed on the cordless device for moving the member from the first position to the second position.

5. A system according to claim 4, wherein a second protrusion (111P) is disposed on the charger for moving the member from the second position to the first position.

6. A system according to claim 4 or 5, wherein the first position indicates that the battery pack is charged and second position indicates that the battery pack has been used.

7. A system according to any one of the preceding claims, wherein the first protrusion is disposed on the charger for moving the member from the second position to the first position.

8. A system according to claim 7, wherein a second protrusion is disposed on the cordless device for moving the member from the first position to the second position.

9. A system according to claim 7 or 8, wherein the first position indicates that the battery pack is charged and second position indicates that the battery pack has been used.

10. A system according to any one of the preceding claims, wherein the battery pack further comprises a spring (125S) disposed between the housing and the member.

11. A system according to any one of the preceding claims, wherein the at least one cell has a chemistry of at least one of the group consisting of lithium-ion, nickel cadmium, nickel metal hydride and lead-acid.

12. A battery pack (120) comprising:
a housing (121);
at least one cell (122) disposed within the housing;
pack terminals (123) connectable to the device terminals; and
a movable member (125M) disposed within the housing, the member being movable between first and second positions to indicate a condition of the battery pack;
**characterised in that** one of the housing and the member has a detent (125D) engaging a detent notch (125N) disposed on the other of the housing and member for maintaining the member in at least one of the first and second positions.

13. A battery pack according to claim 12, wherein the first position indicates that the battery pack is charged and second position indicates that the battery pack has been used.

14. A battery pack according to claim 12 or 13, further comprising a spring (125S) disposed between the housing and the member.

15. A battery pack according to any one of claims 12 to 14, wherein the at least one cell has a chemistry of at least one of the group consisting of lithium-ion, nickel cadmium, nickel metal hydride and lead-acid.

## Patentansprüche

1. System, umfassend:
ein kabelloses (100) Gerät mit Geräteanschlüssen,
eine Batteriepackung (120), die abnehmbar in Eingriff an dem kabellosen Gerät gebracht werden kann, wobei die Batteriepackung ein Gehäuse (121), mindestens eine in dem Gehäuse angeordnete Zelle (122), an die Geräteanschlüsse anschließbare Packungsanschlüsse (123), ein in dem Gehäuse angeordnetes bewegliches Element (125M) umfasst, wobei das Element zwischen einer ersten und einer zweiten Position beweglich ist, um einen Zustand der Batteriepackung anzuzeigen, und
ein Ladegerät (111), das elektrisch an die Batteriepackung anschließbar ist, um die Batteriepackung zu laden,
wobei das kabellose Gerät und/oder das Ladegerät einen ersten Vorsprung (101 P, 111 P) aufweist bzw. aufweisen, um das Element zwischen den Positionen zu bewegen,
**dadurch gekennzeichnet, dass** entweder das Gehäuse oder das Element eine Raste (125D) aufweist, die in eine Rastkerbe (125N) eingreift, die an dem anderen von Gehäuse oder Element angeordnet ist, um das Element in der ersten und/oder der zweiten Position zu halten.

2. System nach Anspruch 1, wobei das kabellose Gerät ein Elektrowerkzeug ist.

3. System nach Anspruch 1 oder 2, wobei das kabellose Gerät eine Bohrmaschine ist.

4. System nach einem der vorhergehenden Ansprüche, wobei der erste Vorsprung (101 P) am kabellosen Gerät angeordnet ist, um das Element von der ersten Position in die zweite Position zu bewegen.

5. System nach Anspruch 4, wobei am Ladegerät ein zweiter Vorsprung (111 P) angeordnet ist, um das Element von der zweiten Position in die erste Position zu bewegen.

6. System nach Anspruch 4 oder 5, wobei die erste Position anzeigt, dass die Batteriepackung geladen ist und die zweite Position anzeigt, dass die Batteriepackung benutzt wurde.

7. System nach einem der vorhergehenden Ansprüche, wobei der erste Vorsprung am Ladegerät angeordnet ist, um das Element von der zweiten Position in die erste Position zu bewegen.

8. System nach Anspruch 7, wobei der zweite Vorsprung an dem kabellosen Gerät angeordnet ist, um das Element von der ersten Position in die zweite Position zu bewegen.

9. System nach Anspruch 7 oder 8, wobei die erste Position anzeigt, dass die Batteriepackung geladen ist und die zweite Position anzeigt, dass die Batteriepackung benutzt wurde.

10. System nach einem der vorhergehenden Ansprüche, wobei die Batteriepackung ferner eine Feder (125S) umfasst, die zwischen dem Gehäuse und dem Element angeordnet ist.

11. System nach einem der vorhergehenden Ansprüche, wobei die mindestens eine Zelle eine Chemie aus mindestens einem Element der Gruppe aufweist, die aus Lithium-Ionen, Nickel-Cadmium, Nickel-Metallhydrid und Blei-Säure besteht.

12. Batteriepackung (120), umfassend:
ein Gehäuse (121),
mindestens eine in dem Gehäuse angeordnete Zelle (122),
an die Geräteanschlüsse anschließbare Packungsanschlüsse (123) und
ein in dem Gehäuse angeordnetes bewegliches Element (125M), wobei das Element zwischen einer ersten und einer zweiten Position beweglich ist, um einen Zustand der Batteriepackung anzuzeigen,
**dadurch gekennzeichnet, dass** entweder das Gehäuse oder das Element eine Raste (125D) aufweist, die in eine Rastkerbe (125N) eingreift, die an dem anderen von Gehäuse oder Element angeordnet ist, um das Element in der ersten und/oder der zweiten Position zu halten.

13. Batteriepackung nach Anspruch 12, wobei die erste Position anzeigt, dass die Batteriepackung geladen ist und die zweite Position anzeigt, dass die Batteriepackung benutzt wurde.

14. Batteriepackung nach Anspruch 12 oder 13, ferner eine Feder (125S) umfassend, die zwischen dem Gehäuse und dem Element angeordnet ist.

15. Batteriepackung nach einem der Ansprüche 12 bis 14, wobei die mindestens eine Zelle eine Chemie aus mindestens einem Element der Gruppe aufweist, die aus Lithium-Ionen, Nickel-Cadmium, Nickel-Metallhydrid und Blei-Säure besteht.

## Revendications

1. Système comprenant :
un dispositif sans fil (100) ayant des bornes ;
un bloc de pile(s) (120) qui peut être engagé de
manière détachable avec le dispositif sans fil, le bloc de pile(s) comprenant un boîtier (121), au moins une pile (122) disposée dans le boîtier, des bornes de bloc (123) qui peuvent être connectées aux bornes du dispositif, un élément mobile (125M) disposé dans le boîtier, l'élément étant mobile entre une première et une seconde position pour indiquer un état du bloc de pile(s) ; et
un chargeur (111) qui peut être connecté
électriquement au bloc de pile(s) pour charger le bloc de pile(s) ;
dans lequel au moins l'un du dispositif sans fil et du
chargeur a une première saillie (101P, 111P) pour déplacer l'élément entre certaines positions ;
**caractérisé en ce que** l'un du boîtier et de l'élément
présente un arrêt (125D) s'engageant sur une encoche d'arrêt (125N) disposée sur l'autre du boîtier et de l'élément pour maintenir l'élément dans au moins l'une des première et seconde positions.

2. Système selon la revendication 1, dans lequel le dispositif sans fil est un outil électrique.

3. Système selon la revendication 1 ou la revendication 2, dans lequel le dispositif sans fil est un foret.

4. Système selon l'une quelconque des revendications précédentes, dans lequel la première saillie (101P) est disposée sur le dispositif sans fil pour déplacer l'élément de la première position à la seconde position.

5. Système selon la revendication 4, dans lequel une seconde saillie (111P) est disposée sur le chargeur pour déplacer l'élément de la seconde position à la première position.

6. Système selon la revendication 4 ou la revendication 5, dans lequel la première position indique que le bloc de pile (s) est chargé et la seconde position indique que le bloc de pile(s) a été utilisé.

7. Système selon l'une quelconque des revendications précédentes, dans lequel la première saillie est disposée sur le chargeur pour déplacer l'élément de la seconde position à la première position.

8. Système selon la revendication 7, dans lequel une seconde saillie est disposée sur le dispositif sans fil pour déplacer l'élément de la première position à la seconde position.

9. Système selon la revendication 7 ou la revendication 8, dans lequel la première position indique que le bloc de pile (s) est chargé et la seconde position indique que le bloc de pile(s) a été utilisé.

10. Système selon l'une quelconque des revendications précédentes, dans lequel le bloc de pile(s) comprend par ailleurs un ressort (125S) disposé entre le boîtier et l'élément.

11. Système selon l'une quelconque des revendications précédentes, dans lequel la au moins une pile a une chimie d'au moins l'une des piles du groupe constitué d'ions lithium, de nickel-cadmium, d'hydrure de nickel métallique et d'acide-plomb.

12. Bloc de pile(s) (120) comprenant :
un boîtier (121) ;
au moins une pile (122) disposée dans le boîtier ;
des bornes de bloc (123) qui peuvent être connectées
aux bornes du dispositif ; et
un élément mobile (125M) disposé dans le boîtier,
l'élément étant mobile entre une première et une seconde position pour indiquer un état du bloc de pile(s) ;
**caractérisé en ce que** l'un du boîtier et de l'élément
a un arrêt (125D) s'engageant sur une encoche d'arrêt (125N) disposée sur l'autre du boîtier et de l'élément pour maintenir l'élément dans au moins l'une des première et seconde positions.

13. Bloc de pile(s) selon la revendication 12, dans lequel la première position indique que le bloc de piles est chargé et la seconde position indique que le bloc de pile(s) a été utilisé.

14. Bloc de pile(s) selon la revendication 12 ou la revendication 13, comprenant en outre un ressort (125S) disposé entre le boîtier et l'élément.

15. Bloc de pile(s) selon l'une quelconque des revendications 12 à 14, dans lequel la au moins une pile a une chimie d'au moins une pile du groupe constitué d'ions lithium, de nickel et de cadmium, d'hydrure de nickel métallique et d'acide-plomb.
